(19)

**Europäisches Patentamt**
**European Patent Office**
**Office européen des brevets**

(11) **EP 4 370 956 B1**

(12) **EUROPEAN PATENT SPECIFICATION**

(45) Date of publication and mention
of the grant of the patent:
**18.06.2025   Bulletin 2025/25**

(21) Application number: **22750696.1**

(22) Date of filing: **11.07.2022**

(51) International Patent Classification (IPC):
**G02B 6/10** *(2006.01)*       **G02B 6/12** *(2006.01)*
**G02B 6/122** *(2006.01)*      **G02B 6/126** *(2006.01)*
**G02B 6/13** *(2006.01)*       **G02B 6/136** *(2006.01)*
**G02B 6/27** *(2006.01)*       **G02F 1/01** *(2006.01)*

(52) Cooperative Patent Classification (CPC):
**G02B 6/12002; G02B 6/122; G02B 6/126;**
G02B 6/131; G02B 6/136; G02B 6/274;
G02B 6/2766; G02B 2006/12092;
G02B 2006/12116; G02B 2006/12173;
G02B 2006/12176; G02B 2006/12178; G02F 1/011

(86) International application number:
**PCT/EP2022/069358**

(87) International publication number:
**WO 2023/285403 (19.01.2023 Gazette 2023/03)**

(54) **LIGHT POLARISATION CONVERTER AND METHOD OF MANUFACTURE**

LICHTPOLARISATIONSWANDLER UND VERFAHREN ZU SEINER HERSTELLUNG

CONVERTISSEUR DE POLARISATION DE LUMIÈRE ET PROCÉDÉ DE FABRICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **16.07.2021   GB 202110288**

(43) Date of publication of application:
**22.05.2024   Bulletin 2024/21**

(73) Proprietor: **SMART Photonics Holding B.V.**
**5656 AE Eindhoven (NL)**

(72) Inventor: **MILLÁN MEJÍA, Alonso Jesús**
**5656 AE Eindhoven (NL)**

(74) Representative: **EIP**
**Fairfax House**
**15 Fulwood Place**
**London WC1V 6HU (GB)**

(56) References cited:
**JP-A- H1 078 521     JP-A- H11 109 159**

• HEIDRICH H: "PASSIVE MODE CONVERTER
WITH A PERIODICALLY TILTED INP/GAINASP
RIB WAVEGUIDE", IEEE PHOTONICS
TECHNOLOGY LETTERS, IEEE, USA, vol. 4, no.
1, 1 January 1992 (1992-01-01), pages 34 - 36,
XP000244563, ISSN: 1041-1135, DOI: 10.1109/
68.124867

**Description**

<u>Background</u>

Semiconductor structures can be used in photonic integrated circuits (PICs) to perform various functions. Semiconductor structures may be manufactured for use in particular applications within a PIC. A semiconductor structure for use in a PIC comprises materials and is manufactured according to the intended application of the semiconductor structure within that PIC. For example, a PIC may comprise a waveguide structure to allow light to propagate from one part of the PIC to another in a desired manner.

A TE/TM-mode converter with a laterally tilted rib waveguide fabricated on a stepped substrate is described in "Passive mode converter with a periodically tilted InP/GaInAsP rib waveguide", IEEE Photonics Technology Letters, Vol. 4, no. 1, 1 January 1992, pp.34-36, DOI: 10.1109/68.124867.

JP H10 78521 A relates to a semiconductor polarisation rotating element.

JP H11 109159 A relates to a semiconductor wavelength plate type polarisation element consisting of two semiconductor waveguides formed on a semiconductor substrate and arranged in parallel to each other in different heights from the substrate surface.

<u>Brief Description of the Drawings</u>

Figure 1 illustrates schematically a first side cross-section of a first light polarisation converter according to examples;

Figure 2A illustrates a first polarisation of light;

Figure 2B illustrates a second polarisation of light;

Figure 3 illustrates schematically a second side cross-section of the first light polarisation converter;

Figure 4 illustrates schematically a side cross-section of a second light polarisation converter according to examples;

Figure 5 is a flow diagram illustrating a first set of steps as part of a method of manufacturing a light polarisation converter according to examples;

Figure 6 is a flow diagram illustrating a second set of steps as part of the method of manufacturing the light polarisation converter according to examples;

Figures 7A - 7G each illustrate schematically the first side cross-section of the first light polarisation converter at sequential stages during manufacture according to examples;

Figure 8 is a flow diagram illustrating a third set of steps as part of the method of manufacturing the light polarisation converter according to examples;

Figures 9A to 9C each illustrate schematically the first side cross-section of the second light polarisation converter at, respectively, first, second and third stages during manufacture according to a first set of examples;

Figure 10 illustrates the equator plane of the Poincare sphere according to examples;

Figure 11 illustrates schematically a side cross-section of a third light polarisation converter according to examples;

Figure 12 is a graph indicating tilt angle of a first hybrid mode as a function of waveguide width;

Figure 13 is a graph indicating effective refractive index difference as a function of waveguide width;

Figure 14 is a flow diagram illustrating a fourth set of steps as part of the method of manufacturing the light polarisation converter according to examples not being part of the claimed invention; and

Figures 15A to 15C each illustrate schematically the first side cross-section of the second light polarisation converter at, respectively, first, second and third stages during manufacture according to a second set of examples not being part of the claimed invention.

<u>Detailed Description</u>

Examples described herein relate to a semiconductor structure for a PIC. More specifically, the examples described herein relate to a light polarisation converter for a PIC.

In some examples, a PIC is constructed from basic building blocks intended for the construction of the PIC. The basic building blocks include various components, each having a particular function. An example of a basic building block is a waveguide structure. Basic building blocks may have a particular effect on light incident thereon. The examples described herein relate to a light polarisation converter that can be used as a basic building block for a PIC.

A light polarisation converter is a component for an optical system (such as a PIC) which converts between different polarisations of light. For example, a suitably configured light polarisation converter can be used to convert between a first linear polarisation of light and a second linear polarisation of light (e.g. convert horizontally polarised light into vertically polarised light and vice versa). In another example, a suitably configured light polarisation converter can be used to convert between linearly polarised light and circular polarised light. A light polarisation converter may also be referred to as a light polarisation rotator or a birefringence rotator.

Light polarisation converters can be manufactured as a basic building block for a PIC by, for example, wet etching a waveguide to have angled side walls. However, forming one or more boundaries of a waveguide to obtain an angled surface using a wet etching technique may be disadvantageous. This is because etching to create a surface may result in small irregularities in that surface. The irregularities can have an impact on light propagation in the waveguide. Furthermore, the control over the manufacturing process with etching techniques for the waveguide may not be enough to obtain desired manufacturing tolerances for the light polarisation converter. For example, it may be desired that the wet etching continues to a particular depth into a substrate on which the waveguide is supported. However, this etch depth may not be controllable to a desired level.

For better control over light propagation in the waveguide and better manufacturing tolerances, a light polarisation converter is desired in which the waveguide is not wet etched to define an angled side wall, for example.

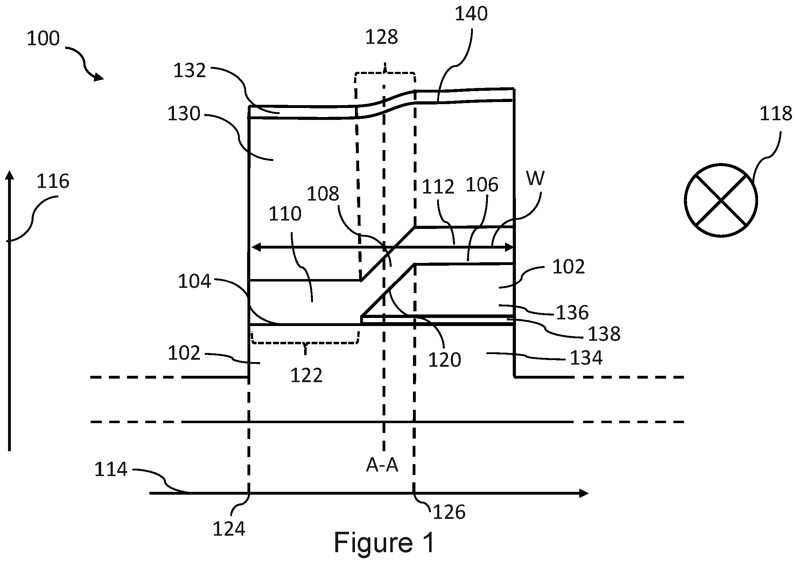

Figure 1 illustrates schematically a side cross-section of a light polarisation converter 100 according to examples. The light polarisation converter 100 is for a PIC. The light polarisation converter 100 comprises a substrate 102. The substrate 102 comprises a first surface 104 and a second surface 106. In some examples, the substrate 102 comprises a so-called III-V semiconductor compound such as Indium Phosphide (InP), gallium arsenide (GaAs), gallium nitride (GaN) or gallium antimonide (GaSb). In other examples, the substrate comprises a Nitride based material or a Silicon based material.

The light polarisation converter 100 comprises a waveguide 108. The waveguide 108 comprises a first waveguide portion 110 in contact with the first surface 104, and a second waveguide portion 112 in contact with the second surface 106.

The second surface 106 is offset from the first surface 104 along a first axis 114 and a second axis 116 each perpendicular to a light propagation direction for converting polarisation of light, such that the second waveguide portion 112 is offset from the first waveguide portion 110. The first axis 114 is perpendicular to the second axis 116.

In the examples of Figure 1, a side-cross section is shown such that the light propagation direction is into the page, as indicated by symbol 118. The first axis 114 is the horizontal axis with respect to the orientation shown in Figure 1, and the second axis 116 is the vertical axis with respect to the orientation shown in Figure 1. For example, the first axis 114 extends in a direction from the first surface 104 towards the second surface 106. As referred to herein, widths of parts of the light polarisation converter 100 are along the first axis 114. As referred to herein, lengths of various parts described herein are along the light propagation direction as indicated by the symbol 118. As referred to herein, the terms height, upper and lower are with respect to the second axis 116. In the orientation shown in Figure 1, the first surface 104 is a lower surface of the substrate 102, and the second surface 106 is an upper surface of the substrate 102. The upper surface 106 provides a step upwards (in a direction parallel to the vertical axis) from the lower surface 104. Therefore, in these examples, the first surface 104 and the second surface 106 are offset in position along the vertical axis 116, e.g. so that the first surface and the second surface are displaced and/or vertically spaced from each other.

The waveguide 108 having the first waveguide portion 110 in contact with the first surface 104 and the second waveguide portion 112 in contact with the second surface 106 means that there is provided a single waveguide 108 in which light can propagate in the light propagation direction indicated by the symbol 118 with different portions offset from one another in a direction parallel to the vertical axis 116.

A single waveguide with portions offset in a direction parallel to the vertical axis 116 provides for conversion of the polarisation of light as described in further detail below.

Because of the structure of the substrate 102 with a first and a second surface offset in a direction parallel to the vertical axis 116, the waveguide 108 can be defined to have an arrangement for polarisation conversion without performing wet etching on the waveguide 108, e.g. to define an angled side wall. For example, one or more materials for the waveguide 108 can be epitaxially grown on the substrate 102, and because of the offset arrangement of the substrate 102, the waveguide 108 with portions offset in a direction parallel to the vertical axis 116 is formed.

The waveguide 108 comprises a material which has a higher refractive index than the material of the substrate 102. For example, the waveguide 108 comprises Indium Gallium Arsenide Phosphide (InGaAsP). More generally, in some examples, the waveguide 108 comprises (Al)InGaAs(P). The elements indicated in the parentheses can be interchangeable and the composition of the different elements is selected depending on the desired function. For example, the composition of Ga and As in InGaAs can be selected according to the desired bandgap. In some examples, the waveguide 108 is a layer of (Al)InGaAs(P). In other examples, the waveguide 108 comprises a plurality of sub-layers. In some such examples, the waveguide 108 comprises a (Al)InGaAs(P)/(Al)InGaAs(P) multiple quantum well structure in contact with the substrate 102. In some examples, the sub-layers are between 5 and 30 nanometres thick. The sub-layer stack of the waveguide 108 has a band gap selected in accordance with the desired application of the light polarisation converter 100.

The bandgap and therefore, as will be appreciated by those skilled in the art, the refractive index of the InGaAsP, for example, can be tuned. In some examples, the bandgap of the InGaAsP of the waveguide 108 is tuned to a wavelength of 1250 nanometres (e.g. for propagation of light of wavelength 1550 nanometres) or 1100 nanometres (e.g. for propagation of light of wavelength 1310 nanometres). In other examples, the wavelength to which the bandgap is tuned is different.

The waveguide 108 is for guiding light. In use, light propagates within the waveguide 108 and is confined within the waveguide 108, due to reflection at the boundaries of the waveguide 108. The waveguide 108 has a refractive index higher than the refractive index of material in contact with the waveguide 108 at the boundaries at which confinement of light is desired. For example, due to this refractive index difference at the boundaries at which confinement of light is desired, total internal reflection takes place when the angle of incidence at these boundaries of the waveguide 108 is greater than the critical angle. In this manner, the waveguide 108 guides the propagation of the light. For a particular optical mode to propagate in the waveguide 108, it is desired that the light reflected at the boundaries of the waveguide 108 fulfils the conditions for constructive interference, as will be appreciated by the skilled person.

For example, particular optical modes of light are desired to propagate through the waveguide 108 depending on the desired application of the light polarisation converter 100. The direction in which the optical modes propagate within the waveguide 108 is herein referred to as the light propagation direction. The light propagation direction is the general direction in which the energy of the optical mode travels through the waveguide 108 and is not necessarily, for example, the direction defined by the angle of incidence at a boundary of the waveguide 108.

In the examples of Figure 1, the substrate 102 comprises a third surface 120 between the first surface 104 and the second surface 106. The third surface 120 is sloped relative to the first surface 104 and/or to the second surface 106. As referred to herein, one surface being sloped relative to another surface means that there is a non-zero angle between the two surfaces in question. As such, reference can be made to one such surface being at a particular angle relative to the other in the context of one surface being sloped relative to another. In such contexts, reference can also be made to a surface being tilted relative to the other. The terms "tilt", "angle" and "slope" are used interchangeably herein to refer to the angle of an entity relative to another entity or relative to a given axis. As referred to herein, that the third surface 120 is "between" the first surface 104 and the second surface 106 means, for example, that the third surface 120 is interposed between the first surface 104 and the second surface 106 and is for example immediately adjacent to each of the first surface 104 and the second surface 106. Thus, the first, second and third surfaces together can in examples be considered together to constitute the top surface of the waveguide.

In the examples of Figure 1, the first axis 114 (also referred to as the horizontal axis 114) is substantially parallel (e.g. parallel within acceptable tolerances) to the plane of the first surface 104. In these examples, the third surface 120 is at an angle less than 90 degrees relative to the first surface 104. In these examples, the second surface 106 is offset from the first surface 104 along the first axis 114 by an amount greater than a width 122 of the first surface 104 along the first axis 114. As referred to herein, the offset in a direction parallel to an axis is relative to a position along that axis where the edge of the entity in question lies (the edge which lies at the earliest position along that axis). For example, in Figure 1, the edge of the first surface 104 lies at a position 124 along the first axis 114. It will be appreciated that a zero offset from the first surface 104 along the first axis 114 would mean that edges of each the first and the second surfaces 104, 106 lie at the same position, the position 124, along the first axis 114. In the examples of Figure 1, the offset along the first axis 114 is such that the second surface 106 does not overlap the first surface 104 and the third surface 120 slopes upwards (with respect to the orientation of Figure 1). In these examples, the position 126 along the first axis 114 at which the edge of the second surface 106 lies is a distance greater than the width 122 of the first surface 104 away from the position 124.

In the examples of Figure 1, the waveguide 108 comprises an intermediate waveguide portion 128 in contact with the third surface 120 and between the first waveguide portion 110 and the second waveguide portion 112. In some examples, the substrate 102 with surfaces offset in a direction parallel to the second axis 116 and a sloped third surface 120, as described, is at least partly formed before the waveguide 108 on top of the substrate 102. In this manner, due to the sloped third surface 120, there is formed an intermediate portion of the waveguide at an angle corresponding to the angle of the sloped third surface 120 of the substrate. Thus, the first waveguide portion, the second waveguide portion and the intermediate waveguide portion can in examples be considered together to constitute the waveguide.

As described, in the examples of Figure 1, the first waveguide portion 110 is in contact with the first surface 104 of the substrate 102. On the other hand, the second waveguide portion 112 is in contact with the second surface 106 which is offset (in a direction parallel to the second axis 116 from the first surface 104. This means that the waveguide 108 comprises two portions which are offset from one another in a direction parallel to the second axis 116. As described, in these examples, the waveguide 108 also comprises the intermediate waveguide portion 128 which is at an angle relative to the second waveguide portion 112 and the first waveguide portion 110 as shown in Figure 1.

This arrangement of the waveguide 108 provides for conversion of the polarisation of light. The following description is in the context of linearly polarised light incident on the light polarisation converter 100 as indicated by the symbol 118.

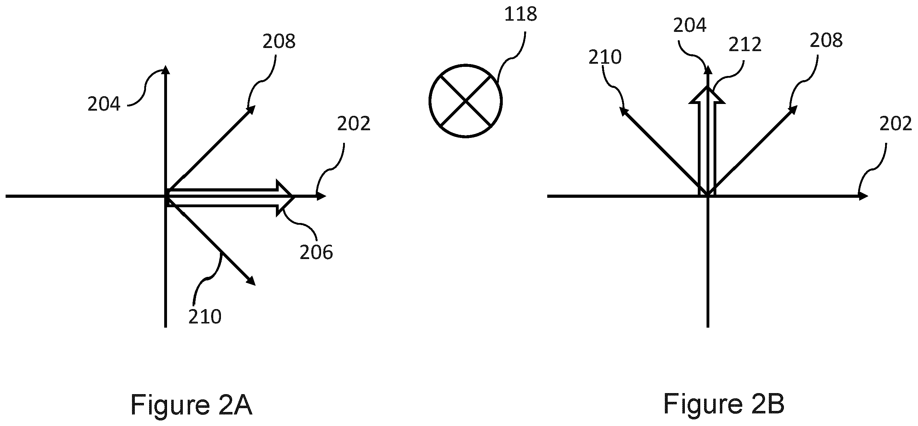

Figure 2 illustrates a transverse electric (TE) polarisation axis 202 and a transverse magnetic (TM) polarisation axis 204. The symbol 118 is included in Figure 2 to indicate the light propagation direction, which is into the page (perpendicular to both the TE polarisation axis 202 and the TM polarisation axis 204). With respect to the cross section of Figure 1, the TE polarisation axis 202 is parallel to the first axis 114, and the TM polarisation axis 204 is parallel to the second axis 116.

For linearly polarised light, the direction of the electric field of light propagating as indicated by the symbol 118 can be indicated with respect to the TE polarisation axis 202 and the TM polarisation axis 204. The arrow 206 indicates linearly polarised light that is TE polarised.

The waveguide 108 having portions offset in a direction parallel to the second axis 116 (and therefore in a direction parallel to the TM axis 204) and the intermediate waveguide portion 128 being at an angle relative to the second waveguide portion 112 and the first waveguide portion 110 provides a single waveguide with portions offset in a direction parallel to the second axis 116. This causes there to be hybrid modes within the waveguide 108. This arrangement of the waveguide 108 provides a "tilted" or sloped boundary condition for the light propagating within the waveguide 108, providing for the hybrid modes. This is because, the light is propagating within a single waveguide which has portions offset in a direction parallel to the vertical axis 116.

The tilted boundary condition causes there to be a first hybrid mode which has an electric field tilted with respect to the TE axis because of the geometry of the waveguide 108 with portions offset in a direction parallel to the second axis 116. The first hybrid mode occupies the first waveguide portion 110, second waveguide portion 112 and the intermediate waveguide portion 128. The terms "tilt", "angle" and "slope" are used interchangeably herein to refer to the angle of the first hybrid mode relative to the TE axis 202. There is also a second hybrid mode orthogonal to the first hybrid mode. A hybrid mode, as referred to herein, is a mode of light which has an electric field with a non-zero component along the TE polarisation axis 202 and a non-zero component along the TM polarisation axis 204.

In the examples of Figure 2, there is shown a first hybrid mode 208 and a second hybrid mode 210. The first and second hybrid modes 208, 210 illustrate an example of hybrid modes that may exist within the waveguide 108 when light is propagating within the waveguide 108. In this example, the first and second hybrid modes 208, 210 arise from light with TE polarisation (with the electric field along the TE polarisation axis 202), as shown by arrow 206, incident on the light polarisation converter 100 for propagation through the waveguide 108.

In the examples of Figure 2, the tilt angle (relative to the TE axis 202) for the first hybrid mode 208 is assumed to be 45 degrees. Such a tilt angle for the first hybrid mode 208 arises as a result of the particular arrangement of the first and second waveguide portions 110, 112 relative to the second axis 116 and the angle of the sloped third surface 120, for example. In these examples, the angle with respect to the TE axis 202 of the second hybrid mode 210 is also 45 degrees and the first and second modes 208, 210 have electric fields with equal magnitude. Those skilled in the art will appreciate that the first and second modes 208, 210, with the tilt angle of 45 degrees and the phase relationship shown in Figure 2A, have equal and opposite components along the TM polarisation axis 204 and in combination correspond to TE polarised light.

Furthermore, the described arrangement of the waveguide 108 causes a different propagation constant for the first and second hybrid modes 208, 210. The arrangement of the waveguide 108 results in birefringence such that the first and second hybrid modes 208, 210 experience different effective refractive indices to one another when propagating within the waveguide 108. This means that the phase difference between the first and second hybrid modes 208, 210 changes as the first and second hybrid modes 208, 210 propagate through the waveguide 108. In other words, the phases of the first and second modes 208, 210 evolve differently as the first and second modes 208, 210 propagate within the waveguide 108. The presence of the hybrid modes and their different propagation constants provide that the arrangement of the waveguide 108 can be used to convert the polarisation of light input into the light polarisation converter 100. The way in which polarisation is converted is described in further detail below.

In some examples, the light polarisation converter 100 is for converting between a first linear polarisation of a given wavelength of light and a second linear polarisation of the given wavelength of light. In some such examples, a length of the waveguide 108 in the light propagation direction is substantially equal to an odd integer multiplied by half of a beat length for the given wavelength of light.

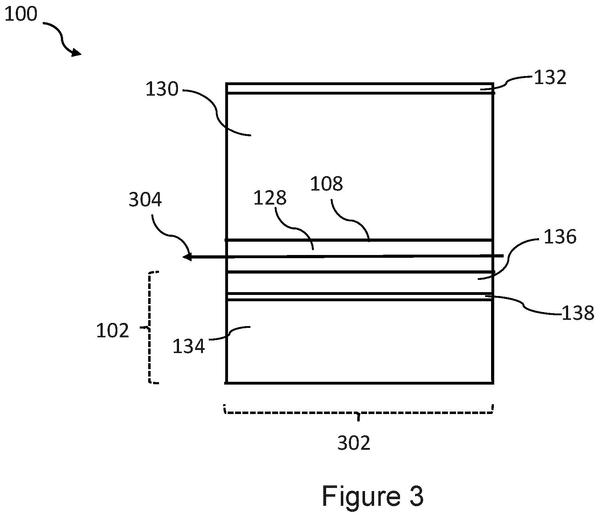

Figure 3 illustrates schematically a side cross-section of the light polarisation converter 100 according to examples. The examples of Figure 3 correspond to the examples of Figure 1. The cross-section of Figure 3 is taken at line A-A indicated in Figure 1. It should be noted that Figure 3 is a schematic illustration and should not be taken to indicate precise proportions with respect to Figure 1, which is also schematic. In these examples, the waveguide 108 has a length 302 as shown in Figure 3. The light propagation direction is indicated by arrow 304.

A length of the waveguide 108 for the phase of the modes of light propagating therein to be restored is referred to as the beat length. For example, if the first and second modes 208, 210 start their propagation within the waveguide 108 in phase, the modes will be back in phase after propagating an integer multiple of the beat length within the waveguide 108. By selecting the waveguide length in the light polarisation converter 100 based on the beat length, the relative phase of the modes of light propagating therein can be controlled for light output from the light polarisation converter 100.

As discussed above, the described arrangement of the waveguide 108 causes a different propagation constant for the first and second hybrid modes 208, 210. The described arrangement of the waveguide 108 (with portions offset in a direction parallel to the vertical axis 116), causes there to be birefringence in that the first and second hybrid modes 208, 210 experience a different effective refractive index to one another. The propagation constant of the first hybrid mode 208 in the waveguide 108 can be represented by $\beta_{208}$ and the propagation constant of the second hybrid mode 210 can be represented by $\beta_{210}$. The difference in these propagation constants can be represented as $\Delta\beta = \beta_{208} - \beta_{210}$. Equation 1 below shows the beat length $L_\lambda$ for the waveguide 108 for the first and second hybrid modes 208, 210. Those skilled in the art will appreciate that $\beta$ represents phase propagation. In Equation (1) below, $\lambda$ is the given wavelength and $\Delta n$ represents the difference in the effective refractive indices of the first and second hybrid modes 208, 210: $\Delta n = n_{208} - n_{210}$.

$$L_\lambda = \frac{2\pi}{\Delta\beta} = \frac{\lambda}{\Delta n} \tag{1}$$

In some examples, the light polarisation converter 100 is for rotating the linear polarisation of the given wavelength of light. As described above, in some such examples, the waveguide length 302 is substantially (within acceptable tolerances) equal to an odd integer multiplied by half of the beat length. This is the case in examples in which the tilt angle of the first mode 208 is 45 degrees relative to the TE axis 202. Factors determining the tilt are described further below. In other words, the waveguide length can be 1/2 of the beat length, 3/2 of the beat length, 5/2 of the length and so on, as indicated by Equation 2 below. In Equation 2, m represents an odd integer such as 1, 3, 5, 7, 9, etc.

$$\text{Waveguide Length } 302 = m\frac{\pi}{\Delta\beta} \tag{2}$$

This means that the relative phase of the first and second modes 208, 210 after propagating through the waveguide 108 is shifted by $\pi$ radians. Those skilled in the art will appreciate that when TE polarised light as indicated by the arrow 206 is incident on the waveguide 108, and the first and second modes 208, 210 arise at the beginning of the waveguide 108, the first and second modes 208, 210 will be in phase with one another. In other words, after propagating through the waveguide 108 with a waveguide length of 1/2 the beat length (or 3/2 the beat length, or 5/2 of the beat length, etc.) the first and second modes 208, 210 are out of phase with each other by 180 degrees.

Figure 2B illustrates the TE and TM polarisation axes 202, 204 shown in Figure 2A. Figure 2B relates to the examples where linear TE polarised light is incident on the waveguide 108 as indicated by Figure 2A, and the tilt angle of the first hybrid mode 208 relative to the TE axis 202 is 45 degrees. Figure 2B illustrates the first and second modes 208, 210 after having propagated through the waveguide 108 in the direction indicated by the symbol 118 for an integer multiple of half the beat length. Those skilled in the art will appreciate that the electric field for light oscillates between opposing quadrants of the space indicated by the TE and TM polarisation axes 202, 204. Accordingly, in comparison to the state shown in Figure 2A, in Figure 2B, the first mode 208 has completed an integer multiple of its electric field oscillations, whereas the second mode 210 has completed an odd integer multiple of half of its electric field oscillation (to end up in the top left quadrant).

Those skilled in the art will appreciate that the first and second modes 208, 210 with the phase relationship shown in Figure 2B have equal and opposite components along the TE polarisation axis 202. The first and second modes 208, 210 with the phase relationship shown in Figure 2B would provide TM polarised light as indicated by the arrow 212, if the first and second modes 208, 210 exit the waveguide 108 with the phase relationship shown in Figure 2B. In other words, if the phases of the first and second modes 208, 210 no longer evolve differently from the point shown in Figure 2B, the result is TM polarised light. It should be noted in the examples of Figure 2B, the first and second modes 208, 210 have a 45 degree angle relative to the TM axis 204.

In these examples, where the first hybrid mode 208 has a 45 degree angle relative to the TE axis 202, by selecting the waveguide length to be an odd integer multiplied by half of the beat length, linear polarisation of the given wavelength of light can be rotated as described above. For example, a first linear polarisation (TE polarisation in the above examples) can be converted to a second linear polarisation (TM polarisation in the above examples).

The above examples are in the context of the first hybrid mode 208 having a 45 degree tilt relative to the TE axis 202. In some examples, the arrangement of the substrate 102 and the waveguide 108 is such that when hybrid modes arise within the waveguide 108, the first hybrid mode 208 (e.g. the hybrid mode substantially aligned with the intermediate waveguide portion 128) does not have a 45 degree angle relative to the TE axis 202. Factors influencing the tilt of the first hybrid mode are discussed further below. In such examples, a 90 degree rotation of polarisation (e.g. from TE polarisation to TM polarisation) does not take place upon propagating through a length 302 equal to an odd integer multiplied by half of the beat length.

In some examples, a light polarisation converter (e.g. the light polarisation converter 100) is provided in which the length 302 of the waveguide 108 is equal to an odd integer multiplied by a quarter of the beat length. A pair of such light polarisation converters can be used where the tilt is not 45 degrees, in order to obtain a 90 degree linear polarisation rotation, as described in the following. A first light polarisation converter of the pair has a length 302 of the waveguide 108 which achieves 90 degree ($\pi/2$ radians) phase difference between the first and second hybrid modes. This means that the length 302 can be 1/4 of the beat length, 5/4 of the beat length, 9/4 of the beat length and so on. A second light polarisation converter of the pair has a length 302 of the waveguide 108 which achieves a 270 degree (3/2 $\pi$ radians) phase difference between the first and the second hybrid modes. This means that the length 302 of the waveguide in the second light polarisation converter can be 3/4 of the beat length, 7/4 of the beat length, 11/4 of the beat length and so on.

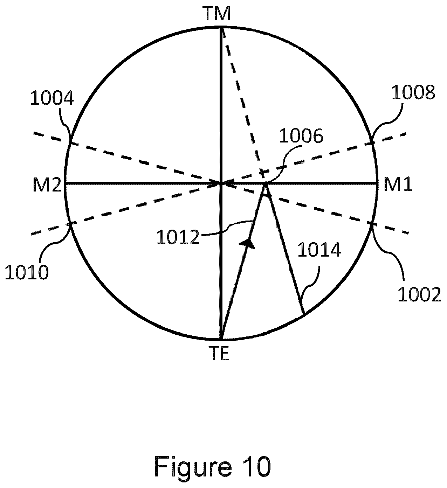

Figure 10 is a sketch of the equator plane of the Poincare sphere. Those skilled in the art will appreciate that all polarisation states can be mapped onto the surface of the so-called Poincare sphere. Points lying on the equator of the Poincare sphere represent all angles of linear polarisation. The poles of the Poincare sphere represent clockwise and anticlockwise circular polarisations. The points corresponding to TE polarisation and TM polarisation can be seen in Figure 10.

Points corresponding to the first and second hybrid modes 208, 210 lie on the equator of the Poincare sphere. The position of the hybrid modes on the equator depends on the tilt, in other words the angle, of the first hybrid mode relative to the TE axis 202.

In the case of the first hybrid mode having a 45 degree angle relative to the TE axis 202, the first hybrid mode corresponds to point M1 and the second hybrid mode corresponds to the point M2. An axis crossing M1 and M2 is perpendicular to an axis crossing the TE and TM polarisation points on the equator of the Poincare sphere. Propagation of the hybrid modes through the waveguide 108, where their phases evolve differently from one another, corresponds to rotation of a point that represents the polarisation when the hybrid modes recombine, about the axis crossing M1 and M2. A 180 degree rotation about an axis crossing M1 and M2 leads to e.g. polarisation conversion from TE polarisation to TM polarisation.

In the case of the first hybrid mode having an acute angle different to 45 degrees relative to the TE axis 202, points corresponding to the first and second hybrid modes are not points M1 and M2. In some examples, the first hybrid mode 208 corresponds to point 1002 and the second hybrid mode 210 corresponds to point 1004. In these examples, a 180 degree rotation about an axis crossing points 1002 and 1004 does not arrive at the TM polarisation point. As described above, when the tilt angle is different to 45 degrees, a 180 degree phase difference between the first and second hybrid modes does not provide a 90 degree rotation of linear polarisation.

However, a 90 degree rotation about the axis crossing points 1002 and 1004 arrives at point 1006. Point 1006 is a point on the surface of the Poincare sphere above the page of Figure 10. In some examples, the first light polarisation converter is used to obtain a polarisation corresponding to point 1006 on the Poincare sphere. In these examples, the first light polarisation converter provides hybrid modes that have polarisations corresponding to points 1002 and 1004. In other words, the first polarisation converter provides a tilt such that the hybrid modes have polarisations corresponding to points 1002 and 1004.

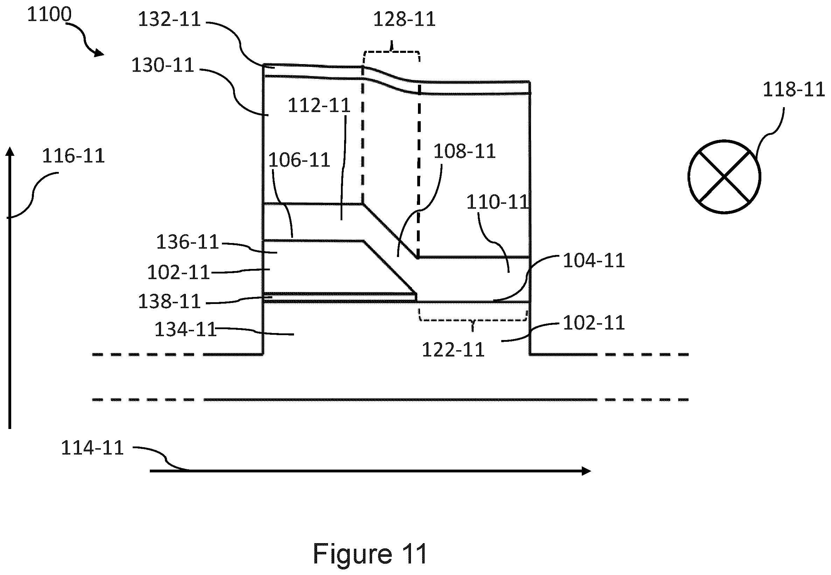

The second polarisation converter of the discussed examples provides a tilt in the opposite direction such that the hybrid modes in the second light polarisation converter correspond to points 1008 and 1010. This can be achieved by the second polarisation converter having a side cross-section (corresponding to the side cross-section shown in Figure 1) which is the mirror image of the side cross-section (corresponding to the side cross-section shown in Figure 1) of the first light polarisation converter. For example, in Figure 1, the first surface 104 (lower surface) is on the left hand side of Figure 1 and the second surface 106 is on the right hand side. As used with respect to the side cross-section, mirror image means that, the first surface 104 (lower surface) is instead on the left hand side and the second surface 106 (upper surface) is on the right hand side with the light propagation direction remaining the same (into the page as indicated by symbol 118). In examples where Figure 1 represents a side cross-section of the first light polarisation converter, Figure 11 illustrates schematically the same side cross-section as that of Figure 1 for examples 1100 of the second light polarisation converter. Features corresponding to those shown in Figure 1 are labelled with similar reference numerals with the additional numeral "-11" added at the end in Figure 11.

An axis crossing points 1008 and 1010 is a mirror image of the axis crossing points 1002 and 1004, relative to the axis crossing points M1 and M2. Line 1012 represent a trajectory from the TE point to point 1006 after a 90 degree rotation about the axis crossing points 1002 and 1004. It should be noted that line 1012 is a straight line projection of the trajectory on the Poincare sphere which would follow the surface of the Poincare sphere.

A rotation about the axis crossing points 1008 and 1010 including the point 1006 traces a circle on the surface of the Poincare sphere which crosses the TM point. A rotation in the opposite direction from point 1006 and about the axis crossing points 1008 and 1010 can be used to arrive at the TM point. The second polarisation converter having a mirrored side-cross section provides rotation relative to the Poincare sphere in the opposite direction to the first light polarisation converter. Line 1014 represents a straight line projection of a trajectory starting from point 1006, corresponding to rotation about the axis crossing points 1008 and 1010 in the opposite direction to the described 90 degree rotation to arrive at point 1006. The trajectory 1014 crosses the TM point after a 270 degree rotation about the axis crossing points 1008 and 1010.

In this manner, even in examples where the tilt of the first hybrid mode is not 45 degrees, a 90 degree rotation of the linear polarisation can be achieved by propagation light through the first light polarisation converter and then the second light polarisation converter.

In some examples, the light polarisation converter 100 is for converting between linear and circular polarisation of the given wavelength of light. In such examples, the waveguide length 302 is substantially (within acceptable tolerances) equal to an odd integer multiplied by a quarter of the beat length. In such examples, the tilt of the first hybrid mode is 45 degrees relative to the TE axis 202. The waveguide length 302 according to such examples is represented by Equation 3 below.

$$\text{Waveguide Length } 302 = m\frac{\pi}{2\Delta\beta} \qquad\qquad (3)$$

The first and second hybrid modes 208, 210 propagating in the waveguide 108 for an odd integer multiple of a quarter of the beat length would result in a phase different of $1/2\,\pi$ radians (or 90 degrees). Those skilled in the art will appreciate that introducing a phase difference of 90 degrees about the axis crossing points M1 and M2 provides for conversion between linear and circular polarisations. Taking the example of linearly polarised light in the horizontal direction as indicated in Figure 2A incident on the waveguide 108, the light polarisation converter 100 with a waveguide length 302 according to Equation 3 would convert the TE polarised light into circularly polarised light. In examples where circularly polarised light is incident on the light polarisation converter for converting between linear and circular polarisations, the circularly polarised light would be converted into linearly polarised light.

In the example of Figure 1 and according to the claimed invention, the substrate 102 comprises a first substrate layer 134 and a second substrate layer 136. The first substrate layer 134 comprises the first surface 104 and the second substrate layer 136 comprises the second surface 106. In some examples, both the first substrate layer 134 and the second substrate layer 136 comprise the same material. In the examples of Figure 1, the substrate 102 comprises a third layer 138 between the first substrate layer 134 and the second substrate layer 136. The first, second and third layers of the substrate 102 are stacked such that the first layer 134 is in contact with the third layer 138 and the third layer 138 is in contact with the second layer 136. In other words, the second layer 136 is on the third layer 138 and the third layer 138 is on the first layer 134 with respect to the orientation shown in Figure 1. The third layer 138 comprises a material different to that of the first substrate layer 134 and the second substrate layer 136.

In these examples, the offset of the second surface 106 from the first surface 104 in a direction parallel to the second axis 116 is defined by the total thickness of the third layer 138 and the second substrate layer 136. The total thickness of the third layer 138 and the second substrate layer 136 may be referred to as a step thickness. The total thickness of whichever layers that defines the offset of the second surface 106 from the first surface 104 in a direction parallel to the second axis 116 can be referred to as the step thickness.

As described above, the first hybrid mode 208 occupies the first waveguide portion 110, second waveguide portion 112 and the intermediate waveguide portion 128. In some examples, the first hybrid mode 208 is substantially aligned with the intermediate waveguide portion 128 so as to have a similar tilt relative to the TE axis as the angle of the intermediate waveguide portion 128. It should be noted that the tilt of the first hybrid mode 208 will depend on the width of the waveguide 108 and the step thickness (assuming a fixed given angle for the third surface 120). In examples, the difference in effective refractive index $\Delta n$ of the first and second hybrid modes 208, 210 will also depend on the width of the waveguide 108 and the step thickness (assuming a fixed given angle for the third surface 120). Accordingly, the width of the waveguide 108 and the step thickness can be selected to obtain the desired tilt angle and effective refractive index difference. As apparent from Equation (1), the effective refractive index difference relates to the beat length $L_\lambda$ and will therefore impact the length 302 of the waveguide 108 depending on the desired application.

In the examples of Figure 1 and 3, the light polarisation converter comprises one or more cladding layers 130 that cover the waveguide 108. In some examples, the one or more cladding layers 130 comprise an uneven surface on a first side opposite to a second side closer to the waveguide 108 than the first side. For example, there is a cladding layer 130 in contact with the top surface of each portion of the waveguide 108. The one or more cladding layers comprise an uneven surface 140 on the first side opposite to the second side closer to, e.g. facing, the waveguide 108. The light polarisation converter 100 may comprise other layers such as an electrical contact layer 132 on top (with respect to the orientation of Figure 1) of the cladding layer 130. As can be seen from the examples of Figure 1, as a consequence of the offsets in a direction parallel to the vertical axis 116 of the substrate 102 and the waveguide 108, the top surface of the light polarisation converter 100 is not completely flat.

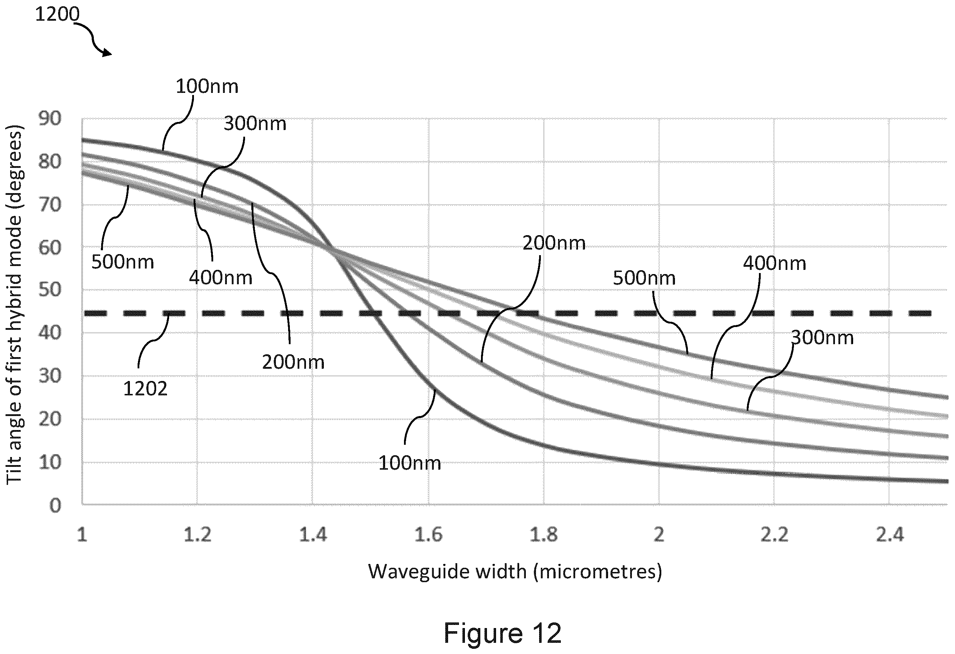

Figure 12 is a graph 1200 indicating tilt angle of the first hybrid mode as a function of waveguide width W (see Figure 1). It should be noted that the waveguide width is along the first axis 114. The vertical axis indicates tilt angle of the first hybrid mode 208 with respect to the TE axis 202 and the horizontal axis indicates waveguide width W. The graph 1200 shows a plurality of relationships for a respective plurality of step thicknesses. The step thicknesses are indicated in Figure 12 in units of nanometres. Line 1202 indicates a tilt angle of the first hybrid mode being 45 degrees. The relationships shown in the graph 1200 are for an example of a light polarisation converter similar to the light polarisation converter 100 of the examples of Figure 1. The third layer 138 and the electrical contact layer 132 were not included. The thickness of the waveguide 108 (in the vertical direction with respect to the orientation shown in Figure 1) was 500 nanometres, the refractive index of the substrate 102 was 3.17 and the refractive index of the cladding layer 130 was 3.17. The refractive index of the waveguide 108 was 3.364, and the refractive index either side of the light polarisation converter (in the orientation shown in Figure 1) was 1.5. The angle of the intermediate waveguide portion was 35 degrees.

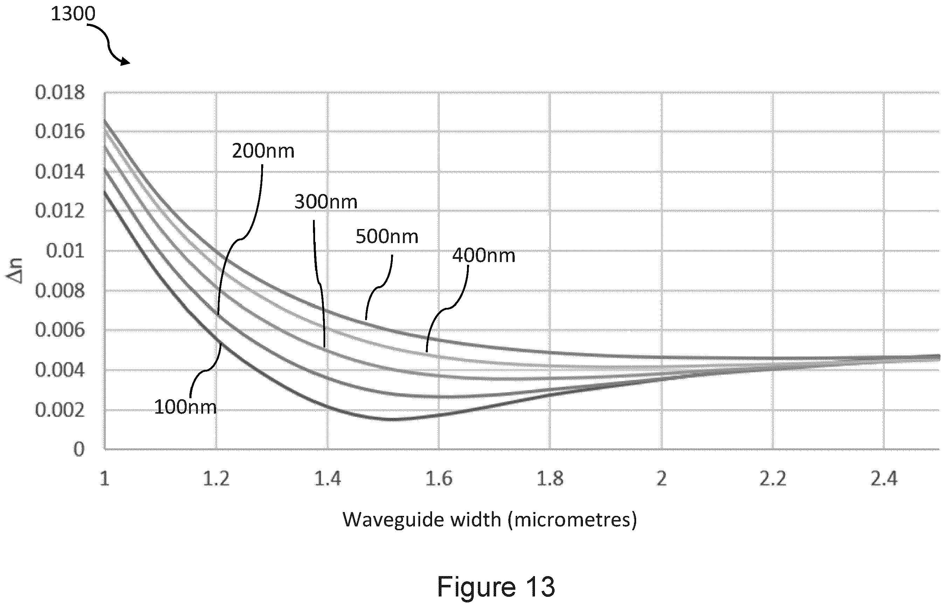

Figure 13 is a graph 1300 indicating Δ*n* as a function of waveguide width. The vertical axis indicates Δ*n*, and the horizontal axis indicated waveguide width. The graph 1300 shows a plurality of relationships for a respective plurality of step thicknesses as indicated. The relationships shown in the graph 1300 are for the same parameters described above with respect to Figure 12.

The skilled person will appreciate that the desired characteristics of the light polarisation converter can be obtained by selecting e.g. waveguide width, step thickness, etc. based on e.g. data such as that shown in Figures 12 and 13.

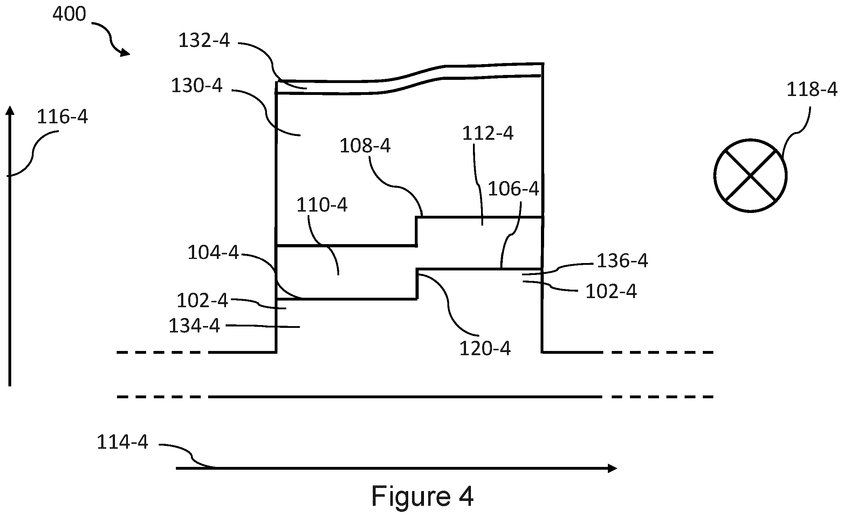

Figure 4 illustrates schematically a side cross-section of a light polarisation converter 400 according to examples. In Figure 4, features corresponding to those shown in Figure 1 are labelled with similar reference numerals with the additional numeral "-4" added at the end.

The light polarisation converter 400 corresponds to the light polarisation converter 100 (and may comprise any combination of the features described above in relation to the light polarisation converter 100), except for the following differences. The substrate 102-4 of the light polarisation converter 400 has a third substrate surface 120-4 between the first surface 104-4 and the second surface 106-4, wherein the third substrate surface 120-4 is sloped relative to the first surface 104-4. The third surface 120-4 is substantially at a 90 degree angle (within acceptable tolerances) relative to the first surface 104-4. In these examples, the third substrate surface 120-4 corresponds to a side wall of the second substrate layer 136-4. In the examples of Figure 4, there is no third layer corresponding to the third layer 138 described above.

As a consequence of the angle of the third surface 120-4 in these examples, the light polarisation converter 400 of Figure 4 does not comprise an intermediate waveguide portion. The first waveguide portion 110-4 is continuous with the second waveguide portion 112-4 instead of having an intermediate, sloped waveguide portion therebetween. As in the case of the examples of Figure 1, the waveguide 108-4 of the light polarisation converter 400 is a single waveguide for propagation of light.

The waveguide 108-4 of the examples of Figure 4 comprises the second waveguide portion 112-4 offset relative to the first waveguide portion 110-4 in a direction parallel to the second axis 116-4, and continuous with the first waveguide portion 110-4 as shown in Figure 4.

The arrangement of the waveguide 108-4 causes there to be hybrid modes within the waveguide 108-4. Similarly, to the waveguide 108 of the examples of Figure 1, this arrangement of the waveguide 108-4 provides a "tilted" or sloped boundary condition for the light propagating within the waveguide 108-4, providing for the hybrid modes. This is because, light propagating within the waveguide 108-4 occupies waveguide regions continuous with one another that are offset in a direction parallel to the second axis 116. In addition, the described arrangement of the waveguide 108-4 causes a different propagation constant for different hybrid modes. The arrangement of the waveguide 108-4 provides birefringence such that the first and second hybrid modes experience different refractive indices to one another within the waveguide 108-4. For example, for light with TE polarisation as shown by arrow 206 of Figure 2A incident on the light polarisation converter 400 for propagation through the waveguide 108-4, the first and second hybrid modes 208, 210 arise with different propagation constants (and consequently different phase evolution).

Both the waveguide 108 of the examples of Figure 1 and the waveguide 108-4 of the examples of Figure 4 give rise to hybrid modes and a different propagation constant for the hybrid modes. As described above, the presence of the hybrid modes and their different propagation constants provide for conversion of the polarisation of light. Therefore, similarly to the light polarisation converter 100 of the examples of Figure 1, the light polarisation converter 400 of the examples of Figure 4 can be used to convert the polarisation of incident light.

Either the examples of Figure 1 or the examples of Figure 4 may be used depending on various factors such as complexity and cost of manufacturing and the desired level of control over the hybrid modes and their propagation constants. For example, the presence of the intermediate waveguide portion 128 being at angle (sloped) provides finer tuning of the characteristics (such as tilt) of the hybrid modes. However, the examples of Figure 4 may be simpler and/or cheaper to manufacture as there is no sloped surface to manufacture.

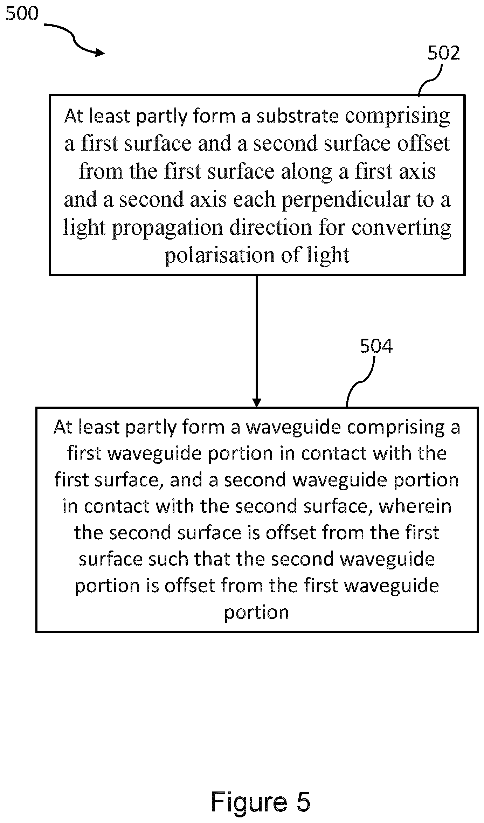

Figure 5 is a block diagram illustrating a method 500 of manufacturing a light polarisation converter for a PIC. The method 500 is for example a method of manufacturing a light polarisation converter according to any of the examples described above. At block 502 of the method 500, a substrate comprising a first surface and a second is at least partly formed. The second surface is offset from the first surface along a first axis and a second axis each perpendicular to a light propagation direction for converting polarisation of the light. The substrate is for example the substrate 102, the substrate 102-4 or the substrate 102-11.

At block 504 of the method 500, a waveguide comprising a first waveguide portion in contact with the first surface, and a second waveguide portion in contact with the second surface is at least partly formed. The second surface is offset from the first surface such that the second waveguide portion is offset from the first waveguide portion. The waveguide is, for example, the waveguide 108, the waveguide 108-4 or the waveguide 108-11 described above. More specific aspects of the method 500 are further described below.

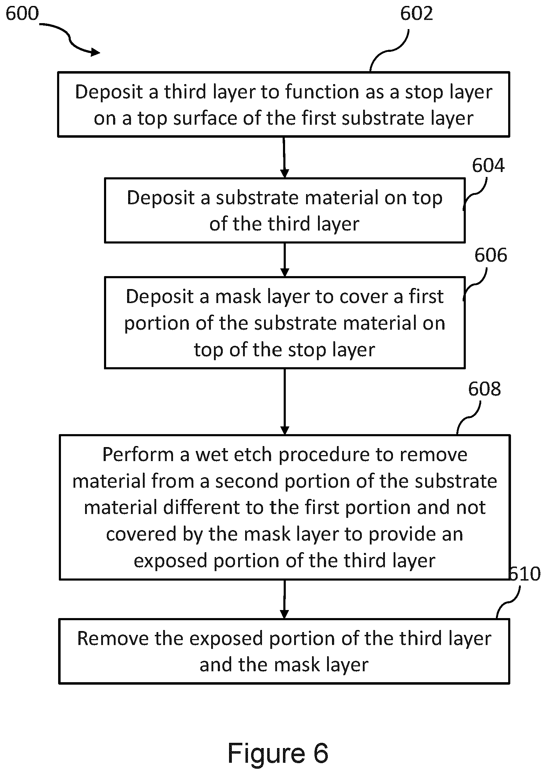

According to the claimed invention, at least partly forming the substrate comprises at least partly forming a first substrate layer, and at least partly forming a second substrate layer, wherein the first substrate layer comprises the first surface and the second substrate layer comprises the second surface. Figure 6 is a block diagram illustrating a method 600. The method 600 relates to the examples of Figures 1, 3 and 11 and can be used to at least partly form the second substrate layer 110 or the second substrate layer 110-11 shown in Figure 1 and Figure 11, respectively. The following description of the method 600 is with reference to the examples of Figures 1 and 3, however, corresponding blocks can be performed for the examples of Figure 11.

At block 602 of the method 600, a third layer (e.g. the third layer 138) is deposited on a top surface of the first substrate layer 134 to function as a stop layer. In the context of the method 600, at least partly forming the second substrate layer comprises the following. At block 604, a substrate material is deposited on top of the stop layer 138. The substrate material is any material described above with respect to the substrate 102. The substrate material is the same material comprised in the first substrate layer 134, for example.

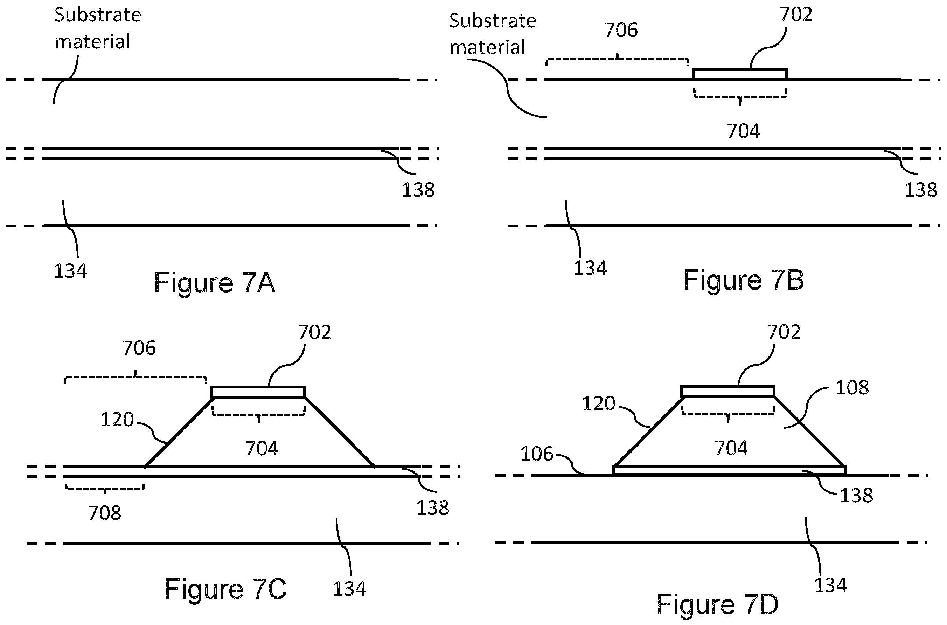

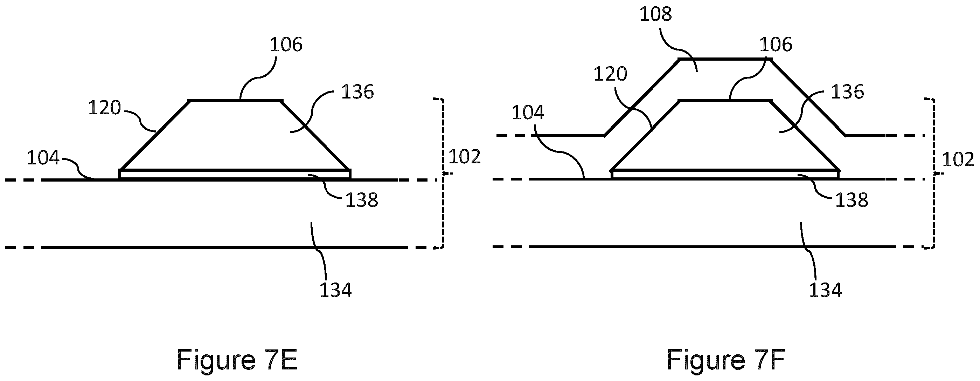

Figure 7A illustrates schematically a side cross-section of a structure as arrived at from performing blocks 602 and 604. Figure 7A is schematic and should not be regarded as represent exact proportions with respect to the examples described above.

At block 606 of the method 600, a mask layer is deposited to cover a first portion of the substrate material on top of the stop layer 138. Figure 7B illustrates schematically a side cross-section of a structure as arrived at from performing block 606. In the examples of Figures 7B, there is shown the mask layer 702 deposited to cover a first portion 704 of the substrate material. In some examples, the mask layer 704 comprises a dielectric material. In some examples, the mask layer 702 is a hard mask comprising SiNx or SiOx, where the "x" indicates that different compositions may be used e.g. $Si_3N_4$. In some examples, the mask layer 702 is a photoresist..

At block 608 of the method 600, a wet etch procedure is performed to remove material from a second portion 706 of the substrate material different to the first portion 704 and not covered by the mask layer. In examples, the stop layer 134 comprises material that is not etchable by the etchant used for etching to remove material not covered by the mask layer. In some examples, the stop layer 134 comprises a quaternary material. Figure 7C illustrates schematically a side cross-section of a structure as arrived at from performing block 608. Block 608 is performed to remove material from the second portion 706 to provide an exposed portion 708 of the stop layer 138.

At block 610 of the method 600, the exposed portion 708 of the stop layer 138 is removed. Figure 7D illustrates schematically a side cross-section of a structure as arrived at from performing block 610. Removal of the exposed portion 708 of the stop layer 138 results in the second surface 106 of the substrate being at least partly formed. In the specific examples of Figure 7D, all exposed parts of the stop layer 138 are removed.

In some examples, the substrate material is InP. In some such examples, the wet etch procedure is performed using HCl:H3PO4:H2O. In some examples, a mixture of HCL, H3PO4 and H2O is selected which etches the desired material (in these examples, InP). In other examples, a mixture of HCL and H2O only is used as etchant. Performing a wet etch procedure, as described, provides an intermediate substrate surface (such as the third substrate surface 120) which is at an angle less than 90 degrees relative to the first surface 104. Those skilled in the art will appreciate that the angle of the third substrate surface 120 would depend on the combination of the crystal structure of the substrate material, the etching chemicals and the particulars of the procedure used.

In some examples, examples of block 504 for at least partly forming the waveguide 108 are employed on the structure resulting from the method 600. In some examples, the mask layer 702 is removed as shown in the schematic illustration of Figure 7E. Removal of the mask layer 702 provides the second surface 106 comprised in the second substrate layer 136.

In such examples, one or more materials for the waveguide 108 is deposited on top of the substrate 102. For example, the waveguide 108 is epitaxially grown using the materials described above in relation to the waveguide. Due to the arrangement of the substrate 102 (e.g. as shown in Figure 7E), the waveguide 108 has portions offset in a direction parallel to the second axis 116 and has an intermediate waveguide portion at an angle as a consequence of the third substrate surface 120 being at an angle as described above.

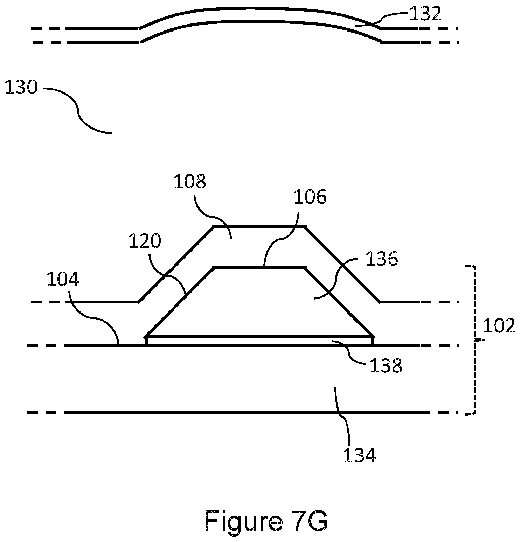

In some examples, other layers are deposited on top of the waveguide 108, such as one or more cladding layers 130 and an electrical contact layer 132. These layers can be seen in the schematic illustration of Figure 7G.

In examples, the structure of Figure 7G undergoes e.g. a dry etching procedure to remove material from either side of the structure, up to a particular depth as desired according to the intended application. For example, a dry etching procedure is performed to remove material and form the light polarisation converter 100 of the examples of Figure 1 and 3. Figures 7A to 7G show the same cross-section as shown in Figure 1 for the resultant light polarisation converter 100.

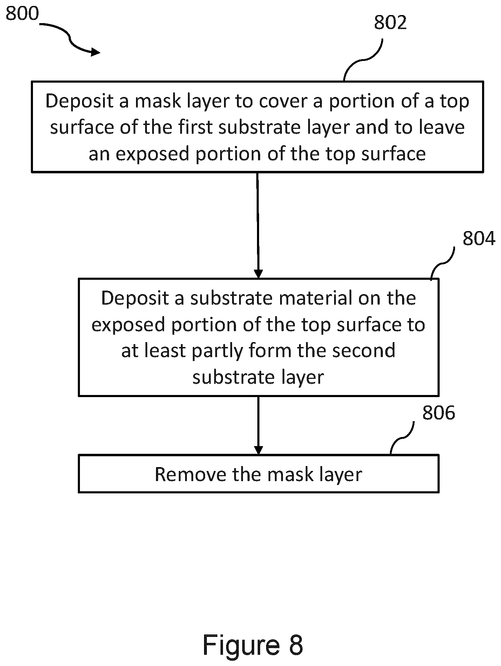

Figure 8 is a block diagram illustrating a method 800 for at least partly forming the second substrate layer. The method 800 relates to the examples of Figure 4 and can be used to at least partly form the second substrate layer 136-4 shown in Figure 4. The following description of the method 800 is with reference to the examples of Figures 4. As used herein, a layer refers to material occupying a volume within a given range of values relating to the vertical axis 116-4.

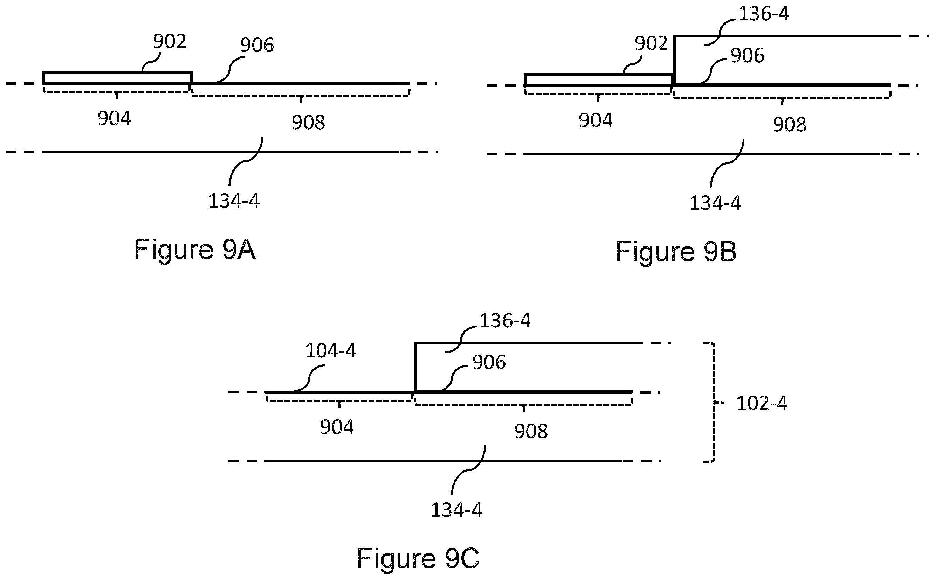

Figure 9A illustrates schematically a side-cross section of a structure in relation to the method 800. At block 802 of the method 800, a mask layer 902 is deposited to cover a portion 904 of a top surface 906 of the first substrate layer (e.g. the first substrate layer 134-4) and to leave an exposed portion 908 of the top surface 906. Figure 9A illustrates schematically a side-cross section of a structure as arrived at from performing block 802.

At block 804 of the method 800, a substrate material is deposited on the exposed portion 908 of the top surface 906 to at least partly form the second substrate layer 136-4. The substrate material is any material described above with respect to the substrate 102 or the substrate 102-4. The substrate material is the same material comprised in the first substrate layer 134-4, for example. Figure 9B illustrates schematically a side-cross section of a structure as arrived at from performing block 804. At block 806 of the method 800, the mask layer 902 is removed. Figure 9C illustrates schematically a side-cross section of a structure as arrived at from performing block 806. Removing the mask layer 902 exposes a part of the surface of the first substrate layer 134-4 to at least partly form the first surface 104-4.

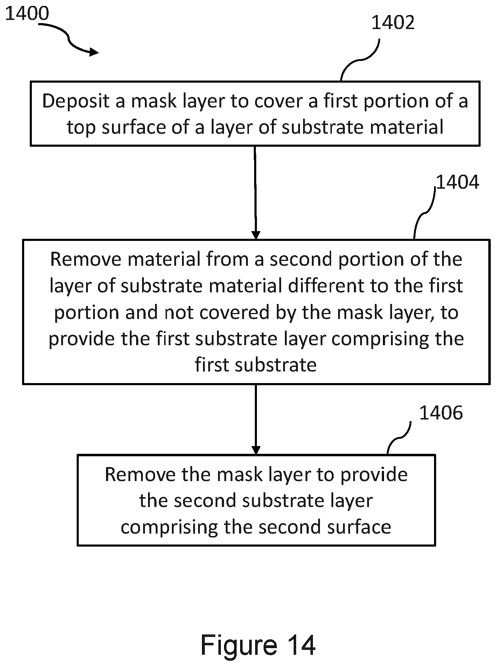

Figure 14 is a block diagram illustrating a method 1400 for at least partly forming the substrate not being part of the claimed invention. The method 1400 relates to the examples of Figure 4 and can be used to at least partly form the first substrate layer 134-4 and the second substrate layer 136-4 shown in Figure 4. The following description of the method 1400 is with reference to the examples of Figures 4. The method 1400 is an alternative to the method 800 described above. As used in this context, a layer refers to material occupying a volume within a given range of values relating to the vertical axis 116-4.

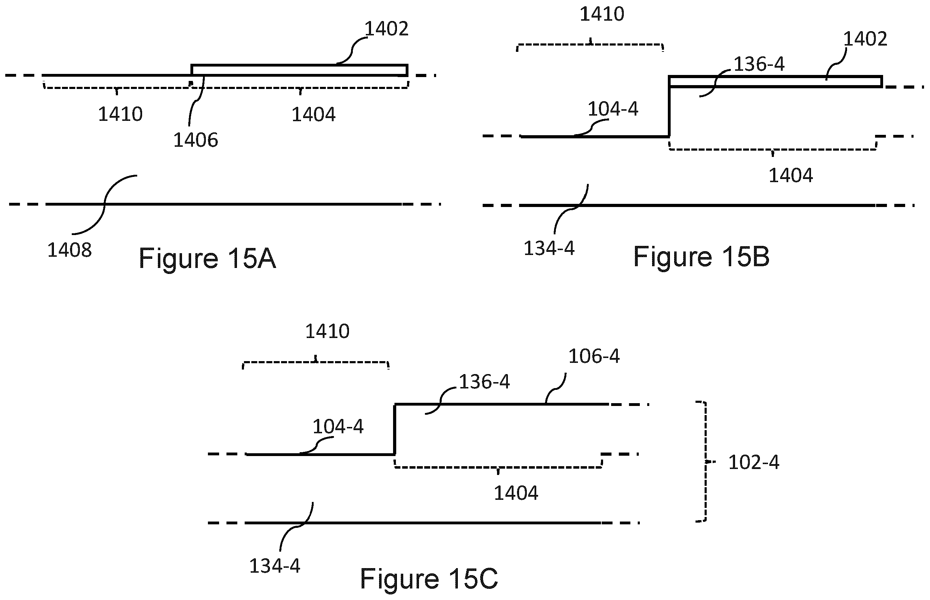

Figure 15A illustrates schematically a side-cross section of a structure in relation to the method 1400. At block 1402 of the method 1400, a mask layer 1402 is deposited to cover a first portion 1404 of a top surface 1406 of a layer of substrate material 1408. Figure 15A illustrates schematically a side-cross section of a structure as arrived at from performing block 1402.

At block 1404 of the method 1400, material from a second portion 1410 of the layer of substrate material 1408 different to the first portion 1404 and not covered by the mask layer 1402 is removed, to provide the first substrate layer 134-4 comprising the first surface 104-4. Figure 15B illustrates schematically a side cross-section of a structure as arrived at from performing block 1404.

At block 1406 of the method 1400, the mask layer 1402 is removed to provide the second substrate layer 136-4 comprising the second surface 106-4. Figure 15C illustrates schematically a side cross-section of a structure as arrived at from performing block 1406.

It will be appreciated that the first and second substrate layers 134-4, 136-4 are provided from the layer of substrate material 1408. It will be understood that the starting point of the method 1400 is the layer of substrate material 1408 of a thickness corresponding to the total desired thickness of the first substrate layer 134-4 and the second substrate layer 136-4.

In some examples, examples of block 504 for at least partly forming the waveguide 108 are employed on the structure resulting from the method 800 or the method 1400. In such examples, one or more materials for the waveguide 108-4 is deposited on top of the substrate 102-4. For example, the waveguide 108-4 is epitaxially grown using the materials described above in relation to the waveguide. Due to the arrangement of the substrate 102-4 (e.g. as shown in Figure 9C), the waveguide 108-4 has portions offset (in a direction parallel to the vertical axis 116-4 and in contact with one another as described above in relation the waveguide 108-4. One or more cladding layers (e.g. cladding layers 130) and an electrical contact layer 132 are deposited on top of the waveguide 108-4, for example.

In examples, a dry etching procedure is performed to remove material from either side of the structure, up to a particular depth as desired according to the intended application. For example, a dry etching procedure is performed to remove material and form the light polarisation converter 400 of the examples of Figure 4.

In examples, the method 500 illustrated in Figure 5 comprises manufacturing the light polarisation converter such that the waveguide has a waveguide length as a function of the beat length (as described above) for the given wavelength of light in the waveguide, wherein the waveguide length is along an axis parallel to a light propagation direction within the waveguide. In some examples, the waveguide length is substantially equal to an odd integer multiplied by half of the beat length. In some examples, the waveguide length is substantially equal to an odd integer multiplied by a quarter of the beat length. One or more of the polarisation converters manufactured using the described methods can be used, as described above, to achieve polarisation conversions, as desired.

In some examples, there is provided a PIC comprising a light polarisation converter according to any of the described examples.

In the above description, reference is made to at least partly forming layers and the like. In some examples, a layer referred to in this manner is simply formed by depositing the relevant material, without requiring further steps. In other examples, further steps are performed to complete the formation of a layer (for example, a curing step, an etching step to define the extent of a layer, etc.). In some examples, the further steps to complete the formation of a layer are performed before further material is deposited on top of the layer in question. In other examples, the further steps to complete the formation of a layer are performed after further material is deposited on top of the layer in question.

In the described Figures, dashed lines are included at the edges of certain parts to indicate continuation of the parts in question beyond what is schematically illustrated in the Figures. The Figures include schematic illustrations of structures related to the described examples of the light polarisation converters. None of the Figures should be taken to indicate precise proportions with respect to any other Figure.

As the skilled person will appreciate, various techniques may be used to deposit a layer of semiconductor material in accordance with examples described herein. Such a technique may be known as a regrowth technique, for example a metalorganic vapour-phase epitaxy (MOVPE) or a molecular beam epitaxy (MBE) process may be used.

The above examples are to be understood as illustrative examples of the invention. It is to be understood that any feature described in relation to any one example may be used alone, or in combination with other features described, and may also be used in combination with one or more features of any other of the examples, or any combination of any other of the examples. Furthermore, modifications not described above may also be employed without departing from the scope of the accompanying claims.

**Claims**

1. A light polarisation converter (100, 400, 1100) for a photonic integrated circuit, comprising:

   A substrate (102, 102-4, 102-11) comprising a first surface (104, 104-4, 104-11) and a second surface (106, 106-4, 106-11), the substrate comprising a first substrate layer (134, 134-4, 134-11) and a second substrate layer (136, 136-4, 136-11), the first substrate layer comprising the first surface and the second substrate layer comprising the second surface; and

   a waveguide (108, 108-4, 108-11) comprising a first waveguide portion (110, 110-4, 110-11) in contact with the first surface, and a second waveguide portion (112, 112-4, 112-11) in contact with the second surface,

   wherein the second surface is offset from the first surface along a first axis (114, 114-4, 114-11) and a second axis (116, 116-4, 116-11) each perpendicular to a light propagation direction (118, 118-4, 118-11) for converting polarisation of the light, such that the second waveguide portion is offset from the first waveguide portion.

2. The light polarisation converter according to claim 1, wherein:
   the substrate comprises a third surface (120, 120-4) between the first surface and the second surface, the third surface sloped relative to the first surface.

3. The light polarisation converter according to claim 2, wherein:
   the third surface is substantially at a 90 degree angle relative to the first surface.

4. The light polarisation converter according to claim 2, wherein:

   the first axis is substantially parallel to the plane of the first surface;
   the third surface is at an angle less than 90 degrees relative to the first surface;
   the second surface is offset from the first surface along the first axis by an amount greater than a width of the first surface along the first axis; and
   the waveguide comprises an intermediate waveguide portion (128, 128-11) in contact with the third surface and between the first waveguide portion and the second waveguide portion.

5. The light polarisation converter according to any one of the preceding claims, wherein:

   the light polarisation converter is for converting between a first linear polarisation of a given wavelength of light and a second linear polarisation of the given wavelength of light; and
   a length of the waveguide in the light propagation direction is substantially equal to an odd integer multiplied by half of a beat length for the given wavelength of light.

6. The light polarisation converter according to any one of claim 1 to 4, wherein:
   a length of the waveguide in the light propagation direction is substantially equal to an odd integer multiplied by a quarter of a beat length for the given wavelength of light.

7. The light polarisation converter according to any one of the previous claims, wherein:
   the substrate comprises a third layer (138, 138-11) between the first substrate layer and the second substrate layer, the first second and third layers are stacked such that the first layer is in contact with the third layer and the third layer is in contact with the second layer, the third layer comprising a material different to that of the first substrate layer and the second substrate layer.

8. The light polarisation converter according to any one of the preceding claims comprising:

   one or more cladding layers (130, 130-4, 130-11) that cover the waveguide,
   wherein:
   the one or more cladding layers comprise an uneven surface on a first side opposite to a second side closer to the waveguide than the first side.

9. A photonic integrated circuit comprising the light polarisation converter according to any one of the preceding claims.

10. A method of manufacturing a light polarisation converter (100, 400, 1100) for a photonic integrated circuit, the method comprising:

    at least partly forming a substrate (102, 102-4, 102-11), wherein at least partly forming the substrate comprises at least partly forming a first substrate layer (134, 134-4, 134-11) comprising a first surface (104, 104-4, 104-11) and at least partly forming a second substrate layer (136, 136-4, 136-11) comprising a second surface (106, 106-4, 106-11); and
    at least partly forming a waveguide (108, 108-4, 108-11) comprising a first waveguide portion (110, 110-4, 110-11) in contact with the first surface, and a second waveguide portion (112, 112-4, 112-11) in contact with the second surface,
    wherein the second surface is offset from the first surface along a first axis (114, 114-4, 114-11) and a second axis (116, 116-4, 116-11) each perpendicular to a light propagation direction (118, 118-4, 118-11) for converting polarisation of the light, such that the second waveguide portion is offset from the first waveguide portion.

11. The method according to claim 10, comprising:
    depositing a third layer (138, 138-11) to function as a stop layer on a top surface of the first substrate layer, and at least partly forming the second substrate layer comprises:

    depositing a substrate material on top of the third layer;
    depositing a mask layer to cover a first portion of the substrate material on top of the third layer;
    performing a wet etch procedure to remove material from a second portion of the substrate material different to the first portion and not covered by the mask layer, to provide an exposed portion of the stop layer; and
    removing the exposed portion of the stop layer and the mask layer.

12. The method according to claim 10, wherein at least partly forming the second substrate layer comprises:

    depositing a mask layer (702, 902, 1402) to cover a portion of a top surface of the first substrate layer and to leave an exposed portion of the top surface;
    depositing a substrate material on the exposed portion of the top surface to at least partly form the second substrate layer; and
    removing the mask layer.

13. The method according to claim 10, wherein at least partly forming the substrate comprises:

    depositing a mask layer (702, 902, 1402) to cover a first portion of a top surface of a layer of substrate material;
    removing material from a second portion of the layer of substrate material different to the first portion and not covered by the mask layer, to provide the first substrate layer comprising the first surface; and
    removing the mask layer to provide the second substrate layer comprising the second surface.

14. The method according to any one of claims 10 to 13, comprising manufacturing:
    the light polarisation converter such that a length of the waveguide in the light propagation direction is substantially equal to an odd integer multiplied by half of a beat length for a given wavelength of light.

15. The method according to any one of claims 10 to 13, comprising manufacturing
    the light polarisation converter such that a length of the waveguide in the light propagation direction is substantially equal to an odd integer multiplied by a quarter of a beat length for a given wavelength of light.

**EP 4 370 956 B1**

**Patentansprüche**

1. Lichtpolarisationswandler (100, 400, 1100) für eine photonische integrierte Schaltung, umfassend:

   Ein Substrat (102, 102-4, 102-11), umfassend eine erste Oberfläche (104, 104-4, 104-11) und eine zweite Oberfläche (106, 106-4, 106-11), das Substrat umfassend eine erste Substratschicht (134, 134-4, 134-11) und eine zweite Substratschicht (136, 136-4, 136-11), die erste Substratschicht umfassend die erste Oberfläche und die zweite Substratschicht umfassend die zweite Oberfläche, und
   einen Wellenleiter (108, 108-4, 108-11), umfassend einen ersten Wellenleiterabschnitt (110, 110-4, 110-11) in Kontakt mit der ersten Oberfläche und einen zweiten Wellenleiterabschnitt (112, 112-4, 112-11) in Kontakt mit der zweiten Oberfläche,
   wobei die zweite Oberfläche von der ersten Oberfläche entlang einer ersten Achse (114, 114-4, 114-11) und einer zweiten Achse (116, 116-4, 116-11) versetzt ist, die jeweils senkrecht zu einer Lichtausbreitungsrichtung (118, 118-4, 118-11) sind, zum Umwandeln der Polarisation des Lichts, derart, dass der zweite Wellenleiterabschnitt von dem ersten Wellenleiterabschnitt versetzt ist.

2. Lichtpolarisationswandler nach Anspruch 1, wobei:
   das Substrat eine dritte Oberfläche (120, 120-4) zwischen der ersten Oberfläche und der zweiten Oberfläche umfasst, wobei die dritte Oberfläche relativ zur ersten Oberfläche geneigt ist.

3. Lichtpolarisationswandler nach Anspruch 2, wobei:
   die dritte Oberfläche im Wesentlichen in einem 90-Grad-Winkel relativ zu der ersten Oberfläche ist.

4. Lichtpolarisationswandler nach Anspruch 2, wobei:

   die erste Achse im Wesentlichen parallel zu der Ebene der ersten Oberfläche ist;
   die dritte Oberfläche in einem Winkel von weniger als 90 Grad relativ zu der ersten Oberfläche liegt;
   die zweite Oberfläche von der ersten Oberfläche entlang der ersten Achse um einen Betrag versetzt ist, der größer als eine Breite der ersten Oberfläche entlang der ersten Achse ist; und
   der Wellenleiter einen Zwischenwellenleiterabschnitt (128, 128-11) in Kontakt mit der dritten Oberfläche, und der zwischen dem ersten Wellenleiterabschnitt und dem zweiten Wellenleiterabschnitt liegt, umfasst.

5. Lichtpolarisationswandler nach einem der vorstehenden Ansprüche, wobei:

   der Lichtpolarisationswandler zum Umwandeln zwischen einer ersten linearen Polarisation einer gegebenen Lichtwellenlänge und einer zweiten linearen Polarisation der gegebenen Lichtwellenlänge dient; und
   eine Länge des Wellenleiters in der Lichtausbreitungsrichtung im Wesentlichen gleich einer ungeraden ganzen Zahl multipliziert mit der Hälfte einer Schwebungslänge für die gegebene Lichtwellenlänge ist.

6. Lichtpolarisationswandler nach einem der Ansprüche 1 bis 4, wobei:
   eine Länge des Wellenleiters in der Lichtausbreitungsrichtung im Wesentlichen gleich einer ungeraden ganzen Zahl multipliziert mit einem Viertel einer Schwebungslänge für die gegebene Lichtwellenlänge ist.

7. Lichtpolarisationswandler nach einem der vorstehenden Ansprüche, wobei:
   das Substrat eine dritte Schicht (138, 138-11) zwischen der ersten Substratschicht und der zweiten Substratschicht umfasst, die erste, die zweite und die dritte Schicht derart gestapelt sind, dass die erste Schicht mit der dritten Schicht in Kontakt steht und die dritte Schicht mit der zweiten Schicht in Kontakt steht, die dritte Schicht umfassend ein unterschiedliches Material als die erste und die zweite Substratschicht.

8. Lichtpolarisationswandler nach einem der vorstehenden Ansprüche, umfassend:
   eine oder mehrere Mantelschichten (130, 130-4, 130-11), die den Wellenleiter bedecken, wobei:
   die eine oder die mehreren Mantelschichten eine unebene Oberfläche auf einer ersten Seite gegenüber einer zweiten Seite, die näher an dem Wellenleiter als die erste Seite liegt, umfassen.

9. Photonische integrierte Schaltung, umfassend Lichtpolarisationswandler nach einem der vorstehenden Ansprüche.

10. Verfahren zum Herstellen einer Struktur (100, 400, 1100) für eine photonische integrierte Schaltung, umfassend:

14

mindestens teilweises Ausbilden eines Substrats (102, 102-4, 102-11), wobei das mindestens teilweise Ausbilden des Substrats das mindestens teilweise Ausbilden einer ersten Substratschicht (134, 134-4, 134-11), umfassend eine erste Oberfläche (104, 104-4, 104-11), und das mindestens teilweise Ausbilden einer zweiten Substratschicht (136, 136-4, 136-11), umfassend eine zweite Oberfläche (106, 106-4, 106-11), umfasst; und mindestens teilweises Ausbilden eines Wellenleiters (108, 108-4, 108-11), umfassend einen ersten Wellenleiterabschnitt (110, 110-4, 110-11) in Kontakt mit der ersten Oberfläche und einen zweiten Wellenleiterabschnitt (112, 112-4, 112-11) in Kontakt mit der zweiten Oberfläche,

wobei die zweite Oberfläche von der ersten Oberfläche entlang einer ersten Achse (114, 114-4, 114-11) und einer zweiten Achse (116, 116-4, 116-11) versetzt ist, die jeweils senkrecht zu einer Lichtausbreitungsrichtung (118, 118-4, 118-11) sind, zum Umwandeln der Polarisation des Lichts, derart, dass der zweite Wellenleiterabschnitt von dem ersten Wellenleiterabschnitt versetzt ist.

**11.** Verfahren nach Anspruch 10, umfassend:
Abscheiden einer dritten Schicht (138, 138-11), um als Stoppschicht auf einer oberen Oberfläche der ersten Substratschicht zu fungieren, und wobei das mindestens teilweise Ausbilden der zweiten Substratschicht umfasst:

Abscheiden eines Substratmaterials auf der dritten Schicht;
Abscheiden einer Maskenschicht, um einen ersten Abschnitt des Substratmaterials auf der dritten Schicht abzudecken;
Durchführen eines Nassätzvorgangs, um Material von einem zweiten Abschnitt des Substratmaterials zu entfernen, der sich von dem ersten Abschnitt unterscheidet und nicht durch die Maskenschicht abgedeckt ist, um einen freiliegenden Abschnitt der Stoppschicht bereitzustellen; und
Entfernen des freiliegenden Abschnitts der Stoppschicht und der Maskenschicht.

**12.** Verfahren nach Anspruch 10, wobei das mindestens teilweise Ausbilden der zweiten Substratschicht umfasst:

Abscheiden einer Maskenschicht (702, 902, 1402), um einen Abschnitt einer oberen Oberfläche der ersten Substratschicht abzudecken und einen freiliegenden Abschnitt der oberen Oberfläche zu lassen;
Abscheiden eines Substratmaterials auf dem freiliegenden Abschnitt der oberen Oberfläche, um mindestens teilweise die zweite Substratschicht auszubilden; und
Entfernen der Maskenschicht.

**13.** Verfahren nach Anspruch 10, wobei das mindestens teilweise Ausbilden des Substrats umfasst:

Abscheiden einer Maskenschicht (702, 902, 1402), um einen ersten Abschnitt einer oberen Oberfläche einer Schicht aus Substratmaterial abzudecken;
Entfernen von Material von einem zweiten Abschnitt der Schicht aus Substratmaterial, der sich von dem ersten Abschnitt unterscheidet und nicht von der Maskenschicht abgedeckt ist, um die erste Substratschicht, umfassend die erste Oberfläche, bereitzustellen; und
Entfernen der Maskenschicht, um die zweite Substratschicht, umfassend die zweite Oberfläche, bereitzustellen.

**14.** Verfahren nach einem der Ansprüche 10 bis 13, umfassend das Herstellen:
des Lichtpolarisationswandlers, derart, dass eine Länge des Wellenleiters in der Lichtausbreitungsrichtung im Wesentlichen gleich einer ungeraden ganzen Zahl multipliziert mit der Hälfte einer Schwebungslänge für eine gegebene Lichtwellenlänge ist.

**15.** Verfahren nach einem der Ansprüche 10 bis 13, umfassend das Herstellen
des Lichtpolarisationswandlers, derart, dass eine Länge des Wellenleiters in der Lichtausbreitungsrichtung im Wesentlichen gleich einer ungeraden ganzen Zahl multipliziert mit einem Viertel einer Schwebungslänge für eine gegebene Lichtwellenlänge ist.


**Revendications**

**1.** Convertisseur de polarisation de lumière (100, 400, 1100) pour un circuit intégré photonique, comprenant :

Un substrat (102, 102-4, 102-11) comprenant une première surface (104, 104-4, 104-11) et une deuxième surface (106, 106-4, 106-11), le substrat comprenant une première couche de substrat (134, 134-4, 134-11) et une deuxième couche de substrat (136, 136-4, 136-11), la première couche de substrat comprenant la première surface et la deuxième couche de substrat comprenant la deuxième surface ; et

un guide d'ondes (108, 108-4, 108-11) comprenant une première partie de guide d'ondes (110, 110-4, 110-11) en contact avec la première surface, et une seconde partie de guide d'ondes (112, 112-4, 112-11) en contact avec la deuxième surface,

dans lequel la deuxième surface est décalée par rapport à la première surface le long d'un premier axe (114, 114-4, 114-11) et d'un second axe (116, 116-4, 116-11), chacun perpendiculaire à une direction de propagation de lumière (118, 118-4, 118-11) permettant de convertir la polarisation de la lumière, de telle sorte que la seconde partie de guide d'ondes est décalée par rapport à la première partie de guide d'ondes.

**2.** Convertisseur de polarisation de lumière selon la revendication 1, dans lequel :
le substrat comprend une troisième surface (120, 120-4) entre la première surface et la deuxième surface, la troisième surface étant inclinée par rapport à la première surface.

**3.** Convertisseur de polarisation de lumière selon la revendication 2, dans lequel :
la troisième surface est sensiblement à un angle de 90 degrés par rapport à la première surface.

**4.** Convertisseur de polarisation de lumière selon la revendication 2, dans lequel :

le premier axe est sensiblement parallèle au plan de la première surface ;
la troisième surface est à un angle inférieur à 90 degrés par rapport à la première surface ;
la deuxième surface est décalée par rapport à la première surface le long du premier axe d'une quantité supérieure à une largeur de la première surface le long du premier axe ; et
le guide d'ondes comprend une partie de guide d'ondes intermédiaire (128, 128-11) en contact avec la troisième surface et entre la première partie de guide d'ondes et la seconde partie de guide d'ondes.

**5.** Convertisseur de polarisation de lumière selon l'une quelconque des revendications précédentes, dans lequel :

le convertisseur de polarisation de lumière est destiné à convertir une première polarisation linéaire d'une longueur d'onde donnée de lumière en une seconde polarisation linéaire de la même longueur d'onde de lumière ; et
une longueur du guide d'ondes dans la direction de propagation de lumière est sensiblement égale à un nombre entier impair multiplié par la moitié d'une longueur de battement pour la longueur d'onde donnée de lumière.

**6.** Convertisseur de polarisation de lumière l'une quelconque des revendications 1 à 4, dans lequel :
une longueur du guide d'ondes dans la direction de propagation de lumière est sensiblement égale à un nombre entier impair multiplié par un quart d'une longueur de battement pour la longueur d'onde donnée de lumière.

**7.** Convertisseur de polarisation de lumière selon l'une quelconque des revendications précédentes, dans lequel :
le substrat comprend une troisième couche (138, 138-11) entre la première couche de substrat et la deuxième couche de substrat, les première, deuxième et troisième couches sont empilées de telle sorte que la première couche est en contact avec la troisième couche et que la troisième couche est en contact avec la deuxième couche, la troisième couche comprenant un matériau différent de celui de la première couche de substrat et de la deuxième couche de substrat.

**8.** Convertisseur de polarisation de lumière selon l'une quelconque des revendications précédentes comprenant :
une ou plusieurs couches de métallisation (130, 130-4, 130-11) qui recouvrent le guide d'ondes, dans lequel :
la ou les couches de métallisation comprennent une surface irrégulière sur un premier côté opposé à un second côté plus proche du guide d'ondes que le premier côté.

**9.** Circuit intégré photonique comprenant le convertisseur de polarisation de lumière selon l'une quelconque des revendications précédentes.

**10.** Procédé de fabrication d'un convertisseur de polarisation de lumière (100, 400, 1100) pour un circuit intégré photonique, le procédé comprenant :

la formation au moins partielle d'un substrat (102, 102-4, 102-11), dans lequel la formation au moins partielle du substrat comprend la formation au moins partielle d'une première couche de substrat (134, 134-4, 134-11) comprenant une première surface (104, 104-4, 104-11) et la formation au moins partielle d'une deuxième couche de substrat (136, 136-4, 136-11) comprenant une deuxième surface (106, 106-4, 106-11) ; et

la formation au moins partielle d'un guide d'ondes (108, 108-4, 108-11) comprenant une première partie de guide d'ondes (110, 110-4, 110-11) en contact avec la première surface, et une seconde partie de guide d'ondes (112, 112-4, 112-11) en contact avec la deuxième surface,

dans lequel la deuxième surface est décalée par rapport à la première surface le long d'un premier axe (114, 114-4, 114-11) et d'un second axe (116, 116-4, 116-11), chacun perpendiculaire à une direction de propagation de lumière (118, 118-4, 118-11) permettant de convertir la polarisation de la lumière, de telle sorte que la seconde partie de guide d'ondes est décalée par rapport à la première partie de guide d'ondes.

11. Procédé selon la revendication 10, comprenant :
le dépôt d'une troisième couche (138, 138-11) destinée à servir de couche d'arrêt sur une surface supérieure de la première couche de substrat, et la formation au moins partielle de la deuxième couche de substrat comprend :

le dépôt d'un matériau de substrat par-dessus la troisième couche ;
le dépôt d'une couche de masque destinée à recouvrir une première partie du matériau de substrat par-dessus la troisième couche ;
la réalisation d'une procédure de gravure humide pour enlever du matériau d'une seconde partie du matériau de substrat, différente de la première partie et non recouverte par la couche de masque, afin de fournir une partie exposée de la couche d'arrêt ; et
le retrait de la partie exposée de la couche d'arrêt et de la couche de masque.

12. Procédé selon la revendication 10, dans lequel la formation au moins partielle de la deuxième couche de substrat comprend :

le dépôt d'une couche de masque (702, 902, 1402) destinée à recouvrir une partie d'une surface supérieure de la première couche de substrat et à laisser une partie exposée de la surface supérieure ;
le dépôt d'un matériau de substrat sur la partie exposée de la surface supérieure pour former au moins partiellement la deuxième couche de substrat ; et
le retrait de la couche de masque.

13. Procédé selon la revendication 10, dans lequel la formation au moins partielle du substrat comprend :

le dépôt d'une couche de masque (702, 902, 1402) destinée à recouvrir une première partie d'une surface supérieure d'une couche de matériau de substrat ;
le retrait de matériau d'une seconde partie de la couche de matériau de substrat différente de la première partie et non recouverte par la couche de masque, afin de fournir la première couche de substrat comprenant la première surface ; et
le retrait de la couche de masque pour obtenir la deuxième couche de substrat comprenant la deuxième surface.

14. Procédé selon l'une quelconque des revendications 10 à 13, comprenant la fabrication :
du convertisseur de polarisation de lumière de telle sorte qu'une longueur du guide d'ondes dans la direction de propagation de lumière est sensiblement égale à un nombre entier impair multiplié par la moitié d'une longueur de battement pour une longueur d'onde donnée de lumière.

15. Procédé selon l'une quelconque des revendications 10 à 13, comprenant la fabrication
du convertisseur de polarisation de lumière de telle sorte qu'une longueur du guide d'ondes dans la direction de propagation de lumière est sensiblement égale à un nombre entier impair multiplié par un quart d'une longueur de battement pour une longueur d'onde donnée de lumière.

Figure 1

Figure 2B

Figure 2A

Figure 3

EP 4 370 956 B1

Figure 4

500

502

At least partly form a substrate comprising a first surface and a second surface offset from the first surface along a first axis and a second axis each perpendicular to a light propagation direction for converting polarisation of light

504

At least partly form a waveguide comprising a first waveguide portion in contact with the first surface, and a second waveguide portion in contact with the second surface, wherein the second surface is offset from the first surface such that the second waveguide portion is offset from the first waveguide portion

Figure 5

600
602

Deposit a third layer to function as a stop layer
on a top surface of the first substrate layer

604

Deposit a substrate material on top
of the third layer

606

Deposit a mask layer to cover a first
portion of the substrate material on
top of the stop layer

608

Perform a wet etch procedure to remove
material from a second portion of the substrate
material different to the first portion and not
covered by the mask layer to provide an
exposed portion of the third layer

610

Remove the exposed portion of the third layer
and the mask layer

Figure 6

Substrate material

702

706

704

138

134

Figure 7A

Substrate material

702

706

704

138

134

Figure 7B

702

706

120

704

138

134

Figure 7C

708

108

702

120

704

138

134

106

Figure 7D

EP 4 370 956 B1

106

120

136

104

138

102

134

Figure 7E

108

120

106

104

136

138

102

134

Figure 7F

Figure 7G

800 802

Deposit a mask layer to cover a portion of a top
surface of the first substrate layer and to leave
an exposed portion of the top surface

804

Deposit a substrate material on the
exposed portion of the top surface to
at least partly form the second
substrate layer

806

Remove the mask layer

Figure 8

Figure 9B

Figure 9A

Figure 9C

Figure 10

Figure 11

Figure 12

Waveguide width (micrometres)

Tilt angle of first hybrid mode (degrees)

1200

100nm

300nm

200nm

400nm

500nm

200nm

1202

100nm

500nm

400nm

300nm

Figure 13

EP 4 370 956 B1

1400

1402

Deposit a mask layer to cover a first portion of a top surface of a layer of substrate material

1404

Remove material from a second portion of the layer of substrate material different to the first portion and not covered by the mask layer, to provide the first substrate layer comprising the first substrate

1406

Remove the mask layer to provide the second substrate layer comprising the second surface

Figure 14

1402

1410

1404

1406

1408

Figure 15A

1410

1402

136-4

104-4

1404

134-4

Figure 15B

1410

106-4

136-4

104-4

102-4

1404

134-4

Figure 15C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1078521 A

- JP H11109159 A

**Non-patent literature cited in the description**

- Passive mode converter with a periodically tilted InP/GaInAsP rib waveguide. *IEEE Photonics Technology Letters*, 01 January 1992, vol. 4 (1), 34-36